# EUROPÄISCHE PATENTSCHRIFT

(11) **EP 2 408 086 B1**
(45) Veröffentlichungstag und Bekanntmachung des Hinweises auf die Patenterteilung: **16.11.2016**
(21) Anmeldenummer: 11161438.4
(22) Anmeldetag: 07.04.2011
(51) Int. Cl.: H02J 7/00, B60L 11/18, H01G 9/00

(54) **Energiespeicheranordnung**
Energy storage assembly
Agencement d'accumulation d'énergie

(30) Priorität: 28.05.2010 DE 102010029427
(43) Veröffentlichungstag der Anmeldung: 18.01.2012
(73) Patentinhaber: Siemens Aktiengesellschaft, 80333 München (DE)
(72) Erfinder: Kleffel, Rüdiger, 91217 Hersbruck (DE)

(56) Entgegenhaltungen:
- DE-A1- 10 157 003
- US-A1- 2006 103 351

## Beschreibung

Die Erfindung bezieht sich auf eine Energiespeicheranordnung mit wenigstens zwei elektrisch in Reihe geschalteten Speichermodulen, die jeweils eine Vielzahl elektrisch in Reihe geschalteter Speicherzellen aufweisen.

Derartige Speichermodule weisen als Speicherzellen Akkumulatorenzellen oder Doppelschichtkondensatoren auf. Akkumulatoren und Doppelschichtkondensatoren sind wiederaufladbare Ladungsspeicher, die im geladenen Zustand elektrische Leistung für eine Last zur Verfügung stellen können. Die Spannung, bei welcher diese Leistung zur Verfügung gestellt wird, ist von der Art des Ladungsspeichers abhängig. Bei Lithium-Ionen-Akkumulatoren liegt diese Spannung im Bereich von etwa 3,3V und bei Doppelschichtkondensatoren bei etwa 2,5V. Zur Versorgung von Lasten, die höhere Versorgungsspannungen benötigen, ist es bekannt, mehrere Speicherzellen zu einer Speicherzellenanordnung in Reihe zu schalten. Die von einer solchen Speicherzellenanordnung bereitgestellte Versorgungsspannung entspricht dabei der Summe der einzelnen Zellenspannungen der in Reihe geschalteten Speicherzellen.

Wegen unvermeidlicher Kapazitätstoleranzen ergeben sich beim Laden der in Reihe geschalteten Speicherzellen verschiedene Spannungen der Speicherzellen einer Speicherzellenanordnung, die im Folgenden als Speichermodul bezeichnet wird. Um die Fähigkeit der Speicherzellen eines Speichermoduls zur Energiespeicherung optimal ausnutzen zu können, muss durch Ladungsausgleich eine gleichmäßige, auch als symmetrisch bezeichnete Spannungsverteilung der Speicherzellen eines Speichermoduls erreicht werden.

Bei Anwendung in elektrischen Antrieben, wie beispielsweise einem Hybridfahrzeug, übersteigt die Versorgungsspannung die Spannung eines Speichermoduls. In Abhängigkeit von einer geforderten Versorgungsspannung, die wesentlich höher ist als die Spannung eines Speichermoduls, müssen mehrere Speichermodule elektrisch in Reihe geschaltet werden. Dies gilt ebenfalls für eine Hochspannungsanordnung, beispielsweise bei Straßenbahnen. Bei solchen Anwendungen sind insbesondere eine Vielzahl von Speichermodulen elektrisch in Reihe geschaltet, wobei jedes Speichermodul eine Vielzahl elektrisch in Reihe geschalteter Speicherzellen aufweist. In einer derartigen aus m Speichermodulen aufgebauten Energiespeicheranordnung ist neben der Symmetrierung der n Speicherzellen eines jeden der m Speichermodule auch eine Symmetrierung der m Speichermodule untereinander erforderlich.

Für die Symmetrierung der Speicherzellen eines jeden Speichermoduls einer Energiespeicheranordnung existieren zwei Klassen von Verfahren, nämlich dissipative und regenerative. Bei dissipativen Verfahren werden Speicherzellen eines Speichermoduls entladen, indem ein Teil ihrer gespeicherten Ladung beispielsweise in ohmschen Widerständen in Wärme umgesetzt wird. Bei regenerativen Verfahren wird überschüssige Energie bzw. Ladung einzelner Speicherzellen eines Speichermoduls auf andere Speicherzellen dieses Speichermoduls umverteilt. Dissipative Verfahren sind beispielsweise aus "Lithium Ion Battery Monitoring System AD7280" von Analog Devices, 2008 bzw. aus "Multicell Battery Stack Monitor LTC6802-1" von Linear Technology, 2009, bekannt.

Mittels dieser dissipativen Verfahren können auch die mehreren Speichermodule einer Energiespeicheranordnung untereinander symmetriert werden, indem gesamte Module dadurch entladen werden, dass an allen ihren n Speicherzellen gleichzeitig gespeicherte Energie in Wärme umgewandelt wird. Nachteilig hierbei ist die hohe anfallende Wärmeleistung, deren Ableitung aus den einzelnen Speichermodulen Probleme bereitet.

Die regenerativen Verfahren unterteilen sich nochmals in induktive Verfahren, die beispielsweise aus "PowerLAN™ Dual-Cell Li-Ion Battery Monitor With PowerPump™ Cell Balancing" von Texas Instruments, 2009, bzw. aus der DE 102008021090 A1 bekannt sind, und kapazitive Verfahren, die beispielsweise aus der EPE-Veröffentlichung, Barcelona 2009, mit dem Titel "Analysis and Improvements of Novel Voltage Balancer for an Electric Double Layer Capacitor Employing a CW circuit" bekannt sind. Eine Symmetrierung von m Speichermodulen einer Energiespeicheranordnung untereinander ist bei den regenerativen Verfahren nur unter Verwendung zusätzlicher Hochspannungskabel zwischen den m Speichermodulen und den Anschlüssen der Energiespeicheranordnung möglich, was einen erheblichen Zusatzaufwand bedeutet.

Aus der DE 101 57 003 A1 ist eine Spannungsausgleichsvorrichtung für Batterien bekannt. Diese Spannungsausgleichsvorrichtung umfasst einen Kern, eine Vielzahl von ersten geschlossenen Schaltungen und eine zweite geschlossene Schaltung. Die Vielzahl der ersten geschlossenen Schaltungen umfasst jeweils eine Einheit aus einer Vielzahl von ersten Batterieeinheiten, die miteinander in Serie verbunden sind, eine Windung aus einer Vielzahl von Sekundärwindungen,, die magnetisch miteinander durch den Kern miteinander verbunden sind, und einer Vorrichtung aus einer Vielzahl von ersten Schaltvorrichtungen.

Aus der US2006/0103351A1 ist ein Batteriezellen-Regelschal-tung bekannt, die eine Vielzahl von in Reihe angeordneten aufladbaren Batteriezellen regelt. Dazu passt ein Zellen-Ausgleicher die Spannung der einzelnen Zellen aneinander an, indem er die Zellen entsprechend ihrer Abweichung von einer Referenzspannung entlädt.

Der Erfindung liegt nun die Aufgabe zugrunde, eine mehrere Speichermodule aufweisende Energiespeicheranordnung derart weiterzubilden, dass bei der Anwendung eines induktiven regenerativen Symmetrierungs-Verfahrens keine zusätzlichen Hochspannungskabel mehr benötigt werden.

Diese Aufgabe wird mit der erfindungsgemäßen Ausgestaltung einer Energiespeicheranordnung gemäß Anspruch 1 gelöst.

Gemäß der erfindungsgemäßen Ausgestaltung einer Energiespeicheranordnung gegenüber einer bekannten Anordnung sind die induktiven Modul-Speicherelemente eines jeden Speichermoduls elektrisch parallel zur Reihenschaltung seiner Speicherzellen geschaltet und jedes Speichermodul weist eine Reihenschaltung eines Leistungswiderstands und eines Modulschalters auf, wobei diese Reihenschaltung jeweils elektrisch parallel zur Reihenschaltung der Speicherzellen eines Speichermoduls geschaltet ist. Mittels dieses Leistungswiderstandes kann jeweils ein Speichermodul einer Energiespeicheranordnung als Ganzes entladen werden, wodurch in mehreren Schritten die Speichermodule einer Energiespeicheranordnung symmetriert werden. Somit werden die Speichermodule einer Energiespeicheranordnung untereinander symmetriert, ohne dass diese Speichermodule mittels Hochspannungskabeln mit Anschlüssen der Energiespeicheranordnung verschaltet werden müssen. Die auftretende Verlustwärme eines jeden Speichermoduls fällt

dann jeweils an seinem Leistungswiderstand an, von wo aus diese einfach abgeführt werden kann.

Vorteilhafte Ausgestaltungen der erfindungsgemäßen Energiespeicheranordnung sind den Unteransprüchen zu entnehmen.

Zur weiteren Erläuterung wird auf die Zeichnung Bezug genommen, in der eine Ausführungsform der erfindungsgemäßen Energiespeicheranordnung schematisch veranschaulicht ist.
- FIG 1: zeigt eine Prinzipdarstellung einer Energiespeicheranordnung mit mehreren Speichermodulen, in der
- FIG 2: ist eine bekannte dissipative Symmetrierung zweier Speichermodule einer Energiespeicheranordnung dargestellt, wobei in der
- FIG 3: eine bekannte regenerative induktive Symmetrierung zweier Speichermodule einer Energiespeicheranordnung veranschaulicht ist, die
- FIG 4: zeigt eine Prinzipdarstellung einer Energiespeicheranordnung nach der Erfindung und in der
- FIG 5: ist ein Speichermodul der Energiespeicheranordnung nach FIG 4 mit seinen Wärmeflüssen näher dargestellt.

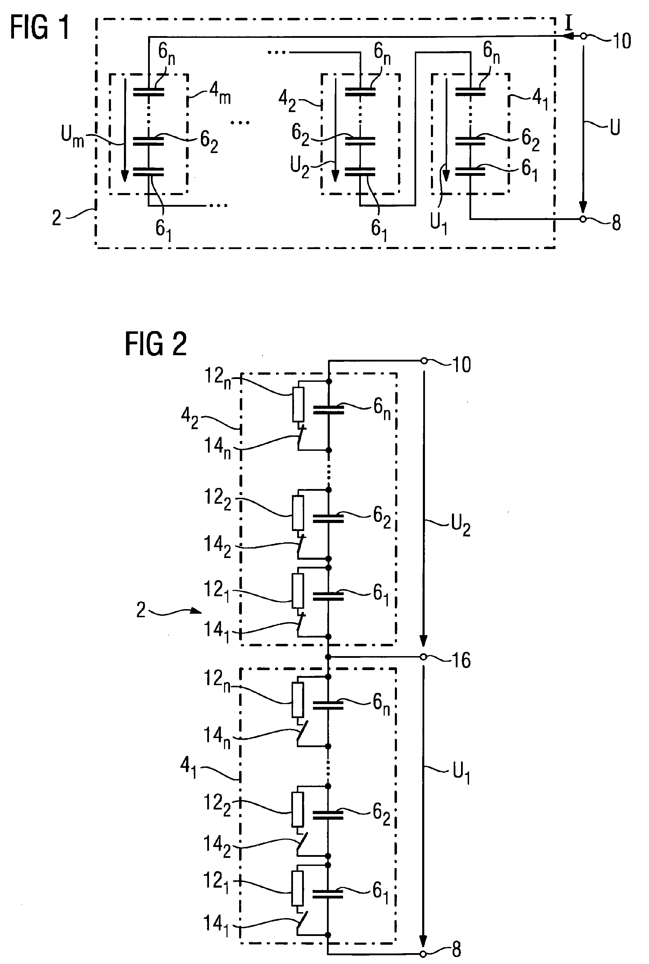

Eine Energiespeicheranordnung 2 für Hochspannungsanwendungen ist schematisch in FIG 1 näher dargestellt. Gemäß FIG 1 weist diese Energiespeicheranordnung 2 m Speichermodule 4₁ bis 4ₘ auf, die elektrisch in Reihe geschaltet sind. Jedes Speichermodul 4₁, ..., 4ₘ weist eine Reihenschaltung mehrerer Zellen 6₁ bis 6ₙ auf. Ein Anschluss des Speichermoduls 4₁ und des Speichermoduls 4ₘ bilden jeweils einen Anschluss 8 und 10 der Energiespeicheranordnung 2. An diesen Anschlüssen wird eine Spannung U, insbesondere eine Ladespannung, angelegt, wodurch ein Ladestrom I in die Energiespeicheranordnung 2 fließt. Diese Spannung U kann amplitudenmäßig einer Zwischenkreisspannung eines Hybridfahrzeugs oder eines Traktionsumrichters einer Straßenbahn entsprechen. Diese Spannung kann mehrere 100V bis einige 1000V betragen. Beispielsweise werden bei einer Speicherspannung U von 820V acht Speichermodule 4₁, ..., 4₈ mit jeweils achtundvierzig elektrisch in Reihe geschalteten Speicherzellen 6₁ ..., 6₄₈ zu einer Energiespeicheranordnung 2 verschaltet. Wird eine derartige Energiespeicheranordnung 2 mit einem Zwischenkreis eines Traktionsumrichters einer Straßenbahn verschaltet, ist es besonders vorteilhaft, wenn als Speicherzellen 6₁, ..., 6₄₈ jeweils Doppelschichtkondensatoren verwendet werden. Doppelschichtkondensatoren werden deshalb bei einem Traktionsantrieb bevorzugt, da diese eine große elektrische Leistung aufnehmen bzw. abgegeben können. Dagegen können Akkumulatoren bezogen auf ihr Volumen und Gewicht hohe Energiemengen speichern, aber nur relativ langsam aufnehmen bzw. abgeben. Aus diesen Gründen hängt die Auswahl eines Typs der Speicherzellen allgemein von der speziellen Anwendung ab.

Wegen unvermeidbarer Kapazitätstoleranzen der Speicherzellen 6₁ bis 6ₙ der m Speichermodule 4₁ bis 4ₘ einer Energiespeicheranordnung 2 ergeben sich beim Laden der n elektrisch in Reihe geschalteten Speicherzellen 6₁ bis 6ₙ der m Speichermodule 4₁ bis 4ₘ verschiedene Spannungen der n Speicherzellen 6₁ bis 6ₙ eines jeden Speichermoduls 4₁ bis 4ₘ und damit auch der m Speichermodule 4₁ bis 4ₘ der Energiespeicheranordnung 2. Um die Fähigkeit der n Speicherzellen 6₁ bis 6ₙ der m Speichermodule 4₁ bis 4ₘ zur Energiespeicherung optimal ausnutzen zu können, muss durch Ladungsausgleich eine gleichmäßige, auch als symmetrisch bezeichnete Spannungsverteilung der n Speicherzellen 6₁ bis 6ₙ und der m Speichermodule 4₁ bis 4ₘ der Energiespeicheranordnung 2 erreicht werden.

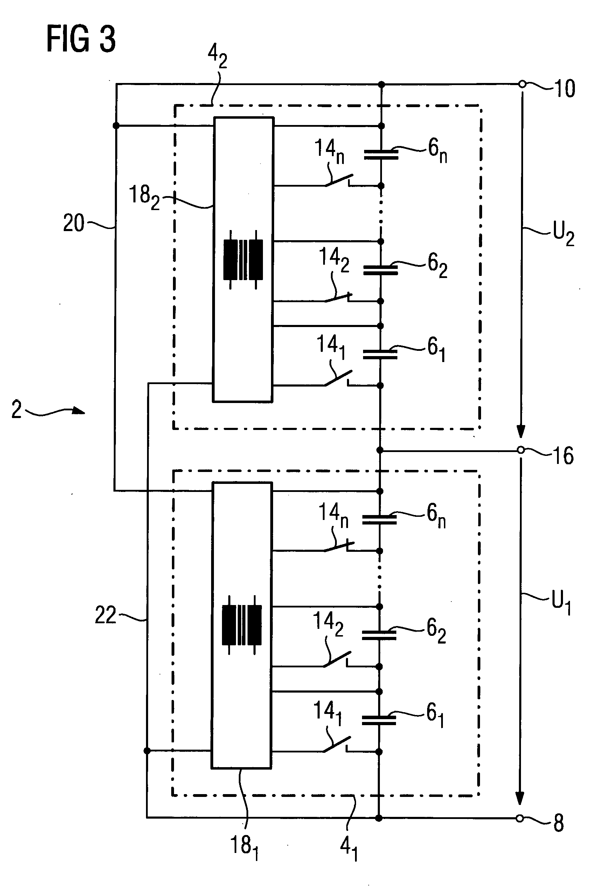

Anhand der Darstellungen der Figuren 2 und 3 soll jeweils ein bekanntes Symmetrierverfahren erläutert werden. In diesen beiden Figuren 2 und 3 sind aus Gründen der Übersichtlichkeit von der Energiespeicheranordnung 2 gemäß FIG 1 nur zwei Speichermodule 4₁ und 4₂ dargestellt. In der FIG 2 ist jeder Speicherzelle 6₁ bis 6ₙ eines Speichermoduls 4₁ und 4₂ elektrisch parallel eine Reihenschaltung geschaltet, die jeweils einen Zellenwiderstand 12₁ bis 12ₙ und einen Zellenschalter 14₁ bis 14ₙ aufweist. Diese Zellenwiderstände 12₁ bis 12ₙ werden auch als Symmetriewiderstände bezeichnet. Als Zellenschalter 14₁ bis 14ₙ werden jeweils abschaltbare Halbleiterschalter, insbesondere feldgesteuerte Transistoren, verwendet. Die Zellenschalter 14₁ bis 14ₙ des Speichermoduls 4₂ der Energiespeicheranordnung 2 sind geschlossen. Dadurch werden die Speicherzellen 6₁ bis 6ₙ dieses Speichermoduls 4₂ entladen, um die Symmetrie der beiden Modulspannungen U₁ und U₂ herzustellen. Um diese Modulspannungen U₁ und U₂ erfassen zu können, ist der Verbindungspunkt zweier Speichermodule 4₂ und 4₁ als Anschluss 16 herausgeführt. Nachdem die Speicherzellen 6₁ bis 6ₙ des Speichermoduls 4₂ um einen vorbestimmten Wert entladen sind, werden die geschlossenen Zellenschalter 14₁ bis 14ₙ wieder geöffnet. Dadurch wird der Ladevorgang fortgesetzt. Die zeitweise Entladung eines oder mehrerer Speichermodule 4₁ bis 4ₘ der Energiespeicheranordnung 2 nach Figur 1 wird so lange wiederholt, bis deren Modulspannungen U₁ bis Um annähernd einander entsprechen. Werden nicht alle Zellenschalter 14₁ bis 14ₙ gleichzeitig geschlossen, so können nach diesem Verfahren auch die Speicherzellen 6₁ bis 6ₙ eines Speichermoduls 4₁ bis 4ₘ untereinander symmetriert werden.

Der Nachteil dieser bekannten Symmetrieranordnung besteht darin, dass gespeicherte Energie an den Zellenwiderständen 12₁ bis 12ₙ in Verlustwärme umgesetzt wird, die von dort jeweils aus einem Speichermodul 4₁ bis 4ₘ dieser Energiespeicheranordnung 2 abgeführt werden muss.

In der FIG 3 sind ebenfalls von der Energiespeicheranordnung 2 der Figur 1 nur zwei Speichermodule 4₁ und 4₂ dargestellt, an Hand derer ein weiteres bekanntes Symmetrierverfahren, nämlich das regenerative induktive Verfahren, erklärt werden soll. Auch bei dieser Anordnung weist jede Speicherzelle 6₁ bis 6ₙ eines Speichermoduls 4₁ bzw. 4₂ einen Zellenschalter 14₁ bis 14ₙ auf, der zusammen mit einem induktiven Zellen-Speicherelement jeweils elektrisch parallel zu einer Speicherzelle 6₁ bis 6ₙ geschaltet ist. Elektrisch parallel zur Reihenschaltung der Speichermoduls 4₁ und 4₂ ist in jedem Speichermodul 4₁ und 4₂ wenigstens ein induktives Modul-Speicherelement geschaltet, das jeweils mittels eines Koppelelements mit induktiven Zellen-Speicherelementen der n Speicherzellen 6₁ bis 6ₙ magnetisch gekoppelt ist.

Diese induktiven Zellen-Speicherelemente, induktives Modul-Speicherelement und das Koppelelement eines jeden Speichermoduls 4₁ bzw. 4₂ sind in der Darstellung der FIG 3 zu einer induktiven Speicheranordnung 18₁ bzw. 18₂ zusammengefasst. Diese induktive Speicheranordnung 18₁ und 18₂, die wegen ihrer Funktion auch als Symmetrieranordnung bezeichnet wird, kann eine Vielzahl von Zellen-Transformatoren bzw. ZellenÜbertragern oder einen Modul-Transformator mit einer Vielzahl von Sekundärwicklungen aufweisen. Diese Zellen-Transformatoren bzw. der Modul-Transformator bilden bzw. bildet zusammen mit den Zellenschaltern 14₁ bis 14ₙ beispielsweise eine Vielzahl von Sperrwandlerschaltungen. Die elektrisch parallel geschalteten Primärwicklungen der Zellen-Transformatoren bzw. die Primärwicklung des Modul-Transformators sind/ist elektrisch zu den Anschlüssen 10 und 8 der Speichermodule 4₂ und 4₁ der Energiespeicheranordnung 2 geschaltet, wobei deren bzw. dessen Sekundärwicklung(en) elektrisch parallel zu jeweils einer Speicherzelle 6₁ bis 6ₙ eines Speichermoduls 4₁ bzw. 4₂ schaltbar sind.

Zum Ausgleichen der Ladezustände wird jeweils einem Speichermodul 4₁ und 4₂ mit einer Reihenschaltung einzelner Zellenspeicher 6₁ bis 6ₙ in einer ersten Betriebsweise des Speichermoduls 4₁ bzw. 4₂ beispielsweise bei einem Zellenspeicher 6₂ Energie entnommen. Der zugehörige Zellenschalter 14₂ ist geschlossen. Diese entnommene Energie wird im magnetischen Kreis der induktiven Symmetrieranordnung 18₂ gespeichert. Im Speichermodul 4₁ ist der Zellenschalter 14ₙ geschlossen, so dass bei dem Zellenspeicher 6ₙ Energie entnommen und im magnetischen Kreis der induktiven Symmetrieranordnung 18₁ gespeichert wird. In einer zweiten Betriebweise wird die im magnetischen Kreis gespeicherte Energie auf alle Sekundärwicklungen der induktiven Speicheranordnung 18₂ bzw. 18₁ eines Speichermoduls 4₂ bzw. 4₁ übertragen und über diese Sekundärwicklungen in die einzelnen Zellenspeicher 6₁ bis 6ₙ des Speichermoduls 4₁ bzw. 4₂ eingespeist. Dadurch werden die Ladezustände der einzelnen Zellenspeicher 6₁ bis 6ₙ eines jeden Speichermoduls 4₁ und 4₂ der Energiespeicheranordnung 2 angeglichen. Durch die Verbindungsleitungen 20 und 22 werden die beiden Primärwicklungen der beiden induktiven Symmetrieranordnungen 18₁ und 18₂ der beiden Speichermodule 4₁ und 4₂ elektrisch parallel geschaltet. Das heißt, die gesamte Ladespannung U der Energiespeicheranordnung 2 steht jeweils an der Primärwicklung einer induktiven Symmetrieranordnung 18₁ bzw. 18₂ an. Wegen der hohen Spannungen, die an den Anschlüssen 10 und 8 anstehen, sind die Verbindungsleitungen 20 und 22 als Hochspannungsleitungen ausgebildet. Bei dieser Ausführungsform einer Energiespeicheranordnung 2, bei der ein regeneratives induktives Symmetrierverfahren verwendet wird, wird abgesehen von parasitären Verlusten keine Energie mehr in

Wärme umgewandelt, die aus den einzelnen Speichermodulen 4₁ bis 4ₘ der Speicheranordnung 2 nach Figur 1 abgeführt werden muss. Dafür müssen die Speichermodule 4₁ bis 4ₘ dieser Energiespeicheranordnung 2 mit Hochspannungsleitungen 20, 22 verschaltet werden. Neben diesem induktiven Verfahren sind weitere regenerative induktive und kapazitive Symmetrierverfahren bekannt, die eine jeweils entsprechende Ausführung der Symmetrieranordnung 18₁ und 18₂ erfordern. Diese Verfahren haben jedoch gemeinsam, dass zur Symmetrierung der Speichermodule 4₁ bis 4ₘ die Hochspannungsleitungen 20 und 22 benötigt werden. Das hier beschriebene induktive Verfahren steht beispielhaft für andere regenerative Verfahren.

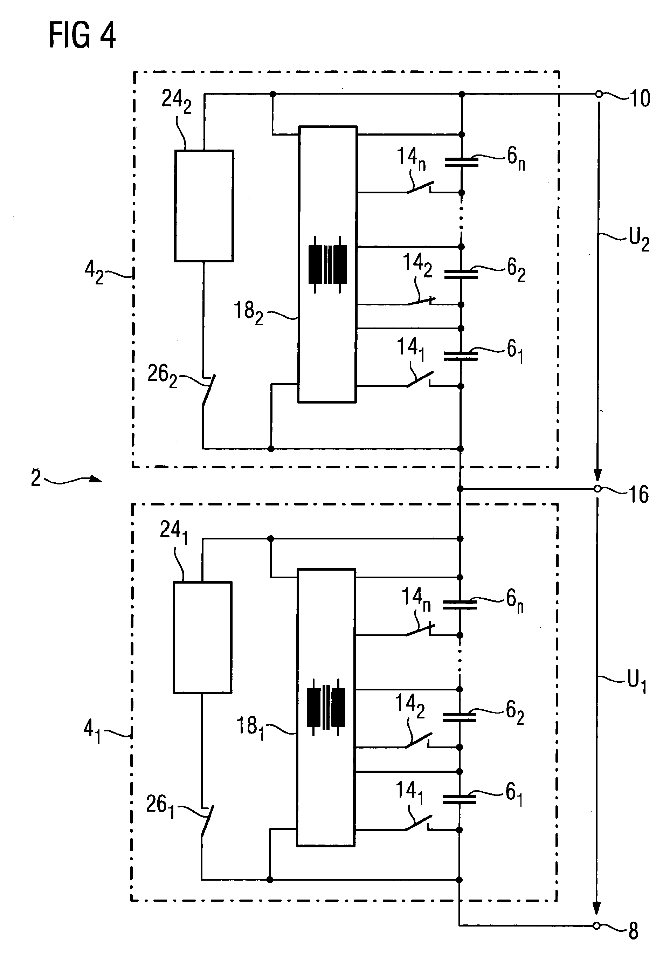

Die erfindungsgemäße Energiespeicheranordnung 2 gemäß FIG 4 unterscheidet sich von der Energiespeicheranordnung 2 gemäß FIG 3 darin, dass jeweils elektrisch parallel zur Reihenschaltung der n Speicherzellen 6₁ bis 6ₙ eines jeden Speichermoduls 4₁, 4₂ eine Reihenschaltung eines Leistungswiderstands 24₁ bzw. 24₂ und eines Modulschalters 26₁ bzw. 26₂ geschaltet ist. Die Hochspannungsleitungen 20 und 22 sind nicht mehr vorhanden. Durch die Reihenschaltung eines Leistungswiderstands 24₁ bzw. 24₂ und eines Modulschalters 26₁ bzw. 26₂ elektrisch parallel zu den Modulanschlüssen 8, 16 bzw. 16, 10 erfolgt die Symmetrierung der Speichermodule 4₁ und 4₂ der Energiespeicheranordnung 2 untereinander durch Entladen der Speichermodule 4₁ und 4₂ mit hoher Spannung über dem jeweiligen Modulinternen Leistungswiderstand 24₁ bzw. 24₂ durch Schließen des zugehörigen Modulschalters 26₁ bzw. 26₂. Durch diese dissipative Symmetrierung werden die m Speichermodule 4₁ bis 4ₘ der Energiespeicheranordnung 2 untereinander symmetriert, wogegen die Symmetrierung der n Speicherzellen 6₁ bis 6ₙ eines jeden Speichermoduls 4₁ bis 4ₘ regenerativ erfolgt. Durch diese zusätzliche dissipative Symmetrierung mittels eines zuschaltbaren Leistungswiderstandes 24₁ bzw. 24₂ eines jeden Speichermoduls 4₁ bis 4ₘ der Energiespeicheranordnung 2 nach FIG 1, werden keine Hochspannungsleitungen 20, 22 zur Verschaltung der Speichermodule 4₁ bis 4ₘ der Energiespeicheranordnung 2 mehr benötigt. Dadurch wird nicht nur der Montageaufwand verringert, sondern die Energiespeicheranordnung 2 kann kompakter aufgebaut werden.

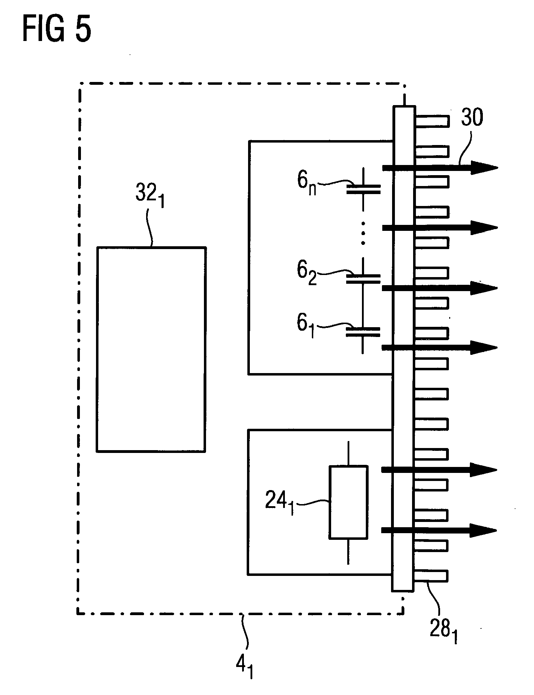

Die Verlustwärme, die in jeweils einem Leistungswiderstand 24₁, 24₂,... einer Energiespeicheranordnung 2 erzeugt wird, muss aus jedem Speichermodul 4₁, 4₂,... herausgeführt werden. Jedes Speichermodul 4₁, 4₂,... einer Energiespeicheranordnung 2 weist einen Modul-Kühlkörper 28₁, 28₂,... auf, der zur Kühlung der Speicherzellen 6₁ bis 6ₙ benötigt wird. Mit diesen Modul-Kühlkörpern 28₁, 28₂,... ist gemäß der Darstellung eines Speichermoduls 4₁ in der FIG 5 der Leistungswiderstand 24₁ thermisch leitend verbunden. Ebenfalls thermisch leitend mit diesem Modul-Kühlkörper 28₁ sind die Speicherzellen 6₁ bis 6ₙ dieses Speichermoduls 4₁ verbunden. Die erzeugte Verlustwärme wird mittels des Modul-Kühlkörpers 28₁ aus dem Speichermodul 4₁ abgeführt. Dies ist durch den Wärmestrom 30 verdeutlicht. In der Ausführungsform des Speichermoduls 4₁ gemäß FIG 5 ist der Modul-Kühlkörper 28₁ als Luftkühlkörper ausgebildet. Als Modul-Kühlkörper 28₁ kann aber auch ein Flüssigkeits-Kühlkörper bzw. eine Kühlplatte vorgesehen sein. Speichermodule 4₁ bis 4ₘ einer Energiespeicheranordnung 2, die jeweils eine Kühlplatte als Modul-Kühlkörper 28₁ bis 28ₘ aufweisen, können gemeinsam auf einen Kühlkörper eines Hybrid-Fahrzeugs oder eines Traktionsumrichters einer Straßenbahn montiert werden.

Da Zellenschalter 14₁ bis 14ₙ und der Modulschalter 26₁ eines Speichermoduls 4₁ bis 4ₘ für eine Spannungssymmetrierung innerhalb eines Speichermoduls 4₁ bis 4ₘ und der Module 4₁ bis 4ₘ einer Energiespeicheranordnung 2 untereinander betätigt werden müssen, ist jeweils eine Modulsteuereinrichtung 32₁ bis 32ₘ in jedem Speichermodul 4₁ bis 4ₘ der Energiespeicheranordnung 2 vorgesehen. In Abhängigkeit ermittelter Speicherzellen-Spannungen und einer Modulspannung Ui, U₂,..., Uₘ werden n Zellenschalter 14₁ bis 14ₙ eines Moduls 4₁ bis 4ₘ und der Modulschalter 26₁, 26₂,..., 26ₘ betätigt. Die Zellenspannungen stellen jeweils ein Maß für den Ladezustand einer Speicherzelle 6₁ bis 6ₙ eines Moduls 4₁ bis 4ₘ dar.

Durch die erfindungsgemäße Ausgestaltung der m Speichermodule 4₁ bis 4ₘ der Energiespeicheranordnung 2 nach FIG 1 werden nicht nur die Ladezustände der einzelnen n Speicherzellen 6₁ bis 6ₙ eines jeden der m Speichermodule 4₁ bis 4ₘ dieser Energiespeicheranordnung 2 am Ende eines Ladevorgangs aneinander angeglichen, sondern auch die Ladezustände der Speichermodule 4₁ bis 4ₘ dieser Energiespeicheranordnung 2 untereinander. Dabei werden keine Hochspannungsleitungen 20 und 22 für die Verschaltung von m Speichermodulen 4₁ bis 4ₘ zu einer Energiespeicheranordnung 2 mehr benötigt. Dadurch kann eine derartige Energiespeicheranordnung 2 kompakter aufgebaut werden. Außerdem können defekte und ältere Speichermodule 4₁ bis 4ₘ einer bestehenden Energiespeicheranordnung 2 gegen neue Speichermodule 4₁ bis 4ₘ ohne großen Aufwand ausgetauscht werden, da die Speichermodule 4₁ bis 4ₘ einer Energiespeicheranordnung 2 untereinander nicht mehr mit Hochspannungsleitungen 20 und 22 verschaltet sind.

Welche Ausführungsformen für die n Speicherzellen 6₁ bis 6ₙ der m Speichermodule 4₁ bis 4ₘ einer Energiespeicheranordnung 2 zum Einsatz kommen, hängt davon ab, wo diese Energiespeicheranordnung 2 verwendet werden soll. Bei der Verwendung in einem Hybridfahrzeug werden Akkumulatorenzellen, insbesondere Lithium-Ionen-Zellen, verwendet, wogegen bei der Verwendung bei einem Traktionsantrieb, beispielsweise einer Straßenbahn, Doppelschichtkondensatoren als Speicherzellen 6₁ bis 6ₙ bevorzugt werden. Der Vorteil der Akkumulatoren besteht darin, dass diese große Energiemengen speichern und abgeben können. Dagegen besteht der Vorteil der Doppelschichtkondensatoren darin, dass diese große elektrische Leistungen aufnehmen und abgeben können. Beispielsweise besteht bei einer Hochspannungsanwendung die Energiespeicheranordnung 2 wegen einer anstehenden Spannung von beispielsweise 820V aus acht Speichermodulen 4₁ bis 4₈, die jeweils achtundvierzig Speicherzellen 6₁ bis 6₄₈ aufweisen. Da keine Hochspannungsleitungen 20, 22 für die Verschaltung der einzelnen Speichermodule 4₁ bis 4₈ mit den Anschlüssen 10 und 8 der Energiespeicheranordnung 2 mehr benötigt werden, kann eine Energiespeicheranordnung 2 mit erfindungsgemäßen Speichermodulen 4₁ bis 4ₘ für eine Hochspannungsanwendung sehr kompakt ohne großen Aufwand aufgebaut werden.

## Patentansprüche

1. Energiespeicheranordnung (2) mit wenigstens zwei elektrisch in Reihe geschalteten Speichermodulen (4₁, ..., 4ₘ), die jeweils eine Vielzahl elektrisch in Reihe geschalteter Speicherzellen (6₁, ..., 6ₙ) aufweisen, wobei jeder Speicherzelle (6₁, ..., 6ₙ) eines jeden Speichermoduls (4₁, ..., 4ₘ) eine Reihenschaltung eines induktiven Zellen-Speicherelements und eines Zellenschalters (14₁, ..., 14ₙ) elektrisch parallel geschaltet sind, wobei elektrisch parallel zur Reihenschaltung der Speicherzellen (6₁, ..., 6ₙ) eines jeden Speichermoduls (4₁, ..., 4ₘ) wenigstens ein induktives Modul-Speicherelement geschaltet ist, die jeweils mittels eines Koppelelements mit induktiven Zellen-Speicherelementen magnetisch gekoppelt sind, **dadurch gekennzeichnet, dass** elektrisch parallel zur Reihenschaltung der Speicherzellen (6₁, ..., 6ₙ) eines jeden Speichermoduls (4₁, ..., 4ₘ) eine Reihenschaltung eines Leistungswiderstands (24₁, ..., 24ₘ) und eines Modulschalters (26₁, ..., 26ₘ) geschaltet ist.

2. Energiespeicheranordnung (2) nach Anspruch 1, **da- durch gekennzeichnet**, dass jedes Speichermodul (4₁, ..., 4ₘ) eine Modulsteuereinrichtung (32₁, ..., 32ₘ) aufweist, die signaltechnisch mit Steuereingängen der Zellenschalter (14₁ ..., 14ₙ) und des Modulschalters (26₁, ..., 26ₘ) verknüpft sind.

3. Energiespeicheranordnung (2) nach Anspruch 1, **dadurch gekennzeichnet, dass** jeweils für zwei magnetisch gekoppelte induktive Speicherelemente eines Speichermoduls (4₁, ..., 4ₘ) ein Transformator vorgesehen ist.

4. Energiespeicheranordnung (2) nach Anspruch 1, **dadurch gekennzeichnet, dass** für alle magnetisch gekoppelten induktiven Speicherelemente eines Speichermoduls (4₁, ..., 4ₘ) ein Transformator mit einer Vielzahl von Sekundärwicklungen und einer Primärwicklung vorgesehen ist.

5. Energiespeicheranordnung (2) nach Anspruch 1, **dadurch gekennzeichnet, dass** als induktives Speicherelement eine schaltbare Drossel vorgesehen ist.

6. Energiespeicheranordnung (2) nach Anspruch 1, **dadurch gekennzeichnet, dass** jedes Speichermodul (4₁, ..., 4ₘ) einen Modul-Kühlkörper (28₁, ..., 28ₘ) aufweist, mit dem die Speicherzellen (6₁, ..., 6ₙ) und der Leistungswiderstand (24₁, ..., 24ₘ) thermisch leitend verbunden sind.

7. Energiespeicheranordnung (2) nach Anspruch 1, **dadurch gekennzeichnet, dass** als Zellenschalter (14₁, ..., 14ₙ) ein abschaltbarer Halbleiterschalter vorgesehen ist.

8. Energiespeicheranordnung (2) nach Anspruch 1, **dadurch gekennzeichnet, dass** als Modulschalter (26₁, ..., 26ₘ) ein abschaltbarer Halbleiterschalter vorgesehen ist.

9. Energiespeicheranordnung (2) nach einem der Ansprüche 1 bis 8, **dadurch gekennzeichnet, dass** als Speicherzelle (6₁, ..., 6ₙ) eine Akkumulatorzelle vorgesehen ist.

10. Energiespeicheranordnung (2) nach einem der Ansprüche 1 bis 8, **dadurch gekennzeichnet, dass** als Speicherzelle (6₁, ..., 6ₙ) ein Doppelschichtkondensator vorgesehen ist.

11. Energiespeicheranordnung (2) nach Anspruch 10, **dadurch gekennzeichnet, dass** als Akkumulatorzelle eine Lithium-Ionen-Zelle vorgesehen ist.

12. Energiespeicheranordnung (2) nach Anspruch 7 oder 8, **dadurch gekennzeichnet, dass** als abschaltbarer Halbleiterschalter ein Transistor vorgesehen ist.

13. Energiespeicheranordnung (2) nach Anspruch 12, **dadurch gekennzeichnet, dass** als Transistor ein feldgesteuerter Transistor vorgesehen ist.

## Claims

1. Energy storage arrangement (2) comprising at least two storage modules (4₁, ..., 4ₘ) which are electrically connected in series and which each have a multiplicity of storage cells (6₁, ..., 6ₙ) which are electrically connected in series, wherein a series circuit formed by an inductive cell storage element and a cell switch (14₁, ..., 14ₙ) is electrically connected in parallel with each storage cell (6₁, ..., 6ₙ) of each storage module (4₁, ..., 4ₘ), wherein at least one inductive module storage element is electrically connected in parallel with the series circuit formed by the storage cells (6₁, ..., 6ₙ) of each storage module (4₁, ..., 4ₘ), said at least one inductive module storage element in each case being magnetically coupled to inductive cell storage elements by means of a coupling element, **characterized in that** a series circuit formed by a power resistor (24₁, ..., 24ₘ) and a module switch (26₁, ..., 26ₘ) is electrically connected in parallel with the series circuit formed by the storage cells (6₁, ..., 6ₙ) of each storage module (4₁, ..., 4ₘ).

2. Energy storage arrangement (2) according to Claim 1, **characterized in that** each storage module (4₁, ..., 4ₘ) has a module control device (32₁, ..., 32ₘ), which are linked in terms of signaling to control inputs of the cell switches (14₁, ..., 14ₙ) and of the module switch (26₁, ..., 26ₘ)

3. Energy storage arrangement (2) according to Claim 1, **characterized in that** a transformer is provided in each case for two magnetically coupled inductive storage elements of a storage module (4₁, ..., 4ₘ).

4. Energy storage arrangement (2) according to Claim 1, **characterized in that** a transformer having a multiplicity of secondary windings and a primary winding is provided for all the magnetically coupled inductive storage elements of a storage module (4₁, ..., 4ₘ).

5. Energy storage arrangement (2) according to Claim 1, **characterized in that** a switchable inductor is provided as inductive storage element.

6. Energy storage arrangement (2) according to Claim 1, **characterized in that** each storage module (4₁, ..., 4ₘ) has a module heat sink (28₁, ..., 28ₘ), to which the storage cells (6₁, ..., 6ₙ) and the power resistor (24₁, ..., 24ₘ) are thermally conductively connected.

7. Energy storage arrangement (2) according to Claim 1, **characterized in that** a turn-off semiconductor switch is provided as cell switch (14₁, ..., 14ₙ).

8. Energy storage arrangement (2) according to Claim 1, **characterized in that** a turn-off semiconductor switch is provided as module switch (26₁, ..., 26ₘ).

9. Energy storage arrangement (2) according to any of Claims 1 to 8, **characterized in that** a rechargeable battery cell is provided as storage cell (6₁, ..., 6ₙ).

10. Energy storage arrangement (2) according to any of Claims 1 to 8, **characterized in that** a double layer capacitor is provided as storage cell (6₁, ..., 6ₙ).

11. Energy storage arrangement (2) according to Claim 10, **characterized in that** a lithium ion cell is provided as rechargeable battery cell.

12. Energy storage arrangement (2) according to Claim 7 or 8, **characterized in that** a transistor is provided as turn-off semiconductor switch.

13. Energy storage arrangement (2) according to Claim 12, **characterized in that** a field-controlled transistor is provided as transistor.

## Revendications

1. Agencement (2) d'accumulation d'énergie ayant au moins deux modules (4₁, ..., 4ₘ) d'accumulation montés électriquement en série, qui ont respectivement une pluralité de cellules (6₁, ..., 6ₙ) d'accumulation montées électriquement en série, dans lequel un circuit série d'un élément d'accumulation-cellule inductif et d'un interrupteur (14₁, ..., 14ₙ) de cellule est monté électriquement en parallèle avec chaque cellule (6₁, ..., 6ₙ) d'accumulation de chaque module (4₁, ..., 4ₘ) d'accumulation, au moins un élément d'accumulation-module inductif étant monté électriquement en parallèle au circuit série des cellules (6₁, ..., 6ₙ) d'accumulation de chaque module (4₁, ..., 4ₘ) d'accumulation, qui sont couplés magnétiquement respectivement au moyen d'un élément de couplage à des éléments d'accumulation-cellule inductifs, **caractérisé en ce qu'**un circuit série d'une résistance (24₁, ..., 24ₘ) de puissance et d'un interrupteur (26₁, ..., 26ₘ) de module est monté électriquement en parallèle au circuit série des cellules (6₁, ..., 6ₙ) d'accumulation de chaque module (4₁, ..., 4ₘ) d'accumulation.

2. Agencement (2) d'accumulation d'énergie suivant la revendication 1, **caractérisé en ce que** chaque module (4₁, ..., 4ₘ) d'accumulation a un dispositif (32₁, ..., 32ₘ) de commande de module, qui sont combinés en technique du signal à des entrées de commande de l'interrupteur (14₁, ..., 14ₙ) de cellule et de l'interrupteur (26₁, ..., 26ₘ) de module.

3. Agencement (2) d'accumulation d'énergie suivant la revendication 1, **caractérisé en ce qu'**il est prévu un transformateur pour respectivement deux éléments d'accumulation inductifs couplés magnétiquement d'un module (4₁, ..., 4ₘ) d'accumulation.

4. Agencement (2) d'accumulation d'énergie suivant la revendication 1, **caractérisé en ce qu'**il est prévu un transformateur ayant une pluralité d'enroulements secondaires et un enroulement primaire pour tous les éléments d'accumulation inductifs couplés magnétiquement d'un module (4₁, ..., 4ₘ) d'accumulation.

5. Agencement (2) d'accumulation d'énergie suivant la revendication 1, **caractérisé en ce qu'**il est prévu une bobine de self commutable comme élément d'accumulation inductif.

6. Agencement (2) d'accumulation d'énergie suivant la revendication 1, **caractérisé en ce que** chaque module (4₁, ..., 4ₘ) d'accumulation a un corps (28₁, ..., 28ₘ) de refroidissement de module, par lequel les cellules (6₁, ..., 6ₙ) d'accumulation et la résistance (24₁, ..., 24ₘ) de puissance sont reliées d'une manière conductrice thermiquement.

7. Agencement (2) d'accumulation d'énergie suivant la revendication 1, **caractérisé en ce qu'**un interrupteur à semi-conducteur pouvant être ouvert est prévu comme interrupteur (14₁, ..., 14ₘ) de cellule.

8. Agencement (2) d'accumulation d'énergie suivant la revendication 1, **caractérisé en ce qu'**un interrupteur à semi-conducteur pouvant être ouvert est prévu comme interrupteur (26₁, ..., 26ₘ) de module.

9. Agencement (2) d'accumulation d'énergie suivant l'une des revendications 1 à 8, **caractérisé en ce qu'**une cellule d'accumulateur est prévue comme cellule (6₁, ..., 6ₙ) d'accumulation.

10. Agencement (2) d'accumulation d'énergie suivant l'une des revendications 1 à 8, **caractérisé en ce qu'**un condensateur à double couche est prévu comme cellule (6₁, ..., 6ₙ) d'accumulation.

11. Agencement (2) d'accumulation d'énergie suivant la revendication 10, **caractérisé en ce qu'**une cellule lithium-ion est prévue comme cellule d'accumulateur.

12. Agencement (2) d'accumulation d'énergie suivant la revendication 7 ou 8, **caractérisé en ce qu'**un transistor est prévu comme interrupteur à semi-conducteur pouvant être ouvert.

13. Agencement (2) d'accumulation d'énergie suivant la revendication 12, **caractérisé en ce qu'**un transistor commandé par le champ est prévu comme transistor commandé par le champ.
